# EUROPÄISCHE PATENTSCHRIFT

(11) **EP 2 140 155 B1**
(45) Veröffentlichungstag und Bekanntmachung des Hinweises auf die Patenterteilung: **10.08.2011**
(21) Anmeldenummer: 08757957.9
(22) Anmeldetag: 16.04.2008
(51) Int. Cl.: F16C 19/54, F16C 25/06, F16C 33/60, F16H 57/02

(54) **WÄLZLAGER SOWIE LAGERUNGSANORDNUNG MIT WÄLZLAGER**
ROLLING BEARING AND BEARING ARRANGEMENT COMPRISING A ROLLING BEARING
PALIER À ROULEMENT ET SYSTÈME DE PALIER À PALIER À ROULEMENT

(30) Priorität: 27.04.2007 DE 102007019881
(43) Veröffentlichungstag der Anmeldung: 06.01.2010
(73) Patentinhaber: Schaeffler Technologies GmbH & Co. KG, 91074 Herzogenaurach (DE)
(72) Erfinder: GEORGI, Jan, 97464 Niederwerrn (DE); STÜRZENBERGER, Martin, 97502 Euerbach (DE)
(86) Internationale Anmeldenummer: PCT/DE2008/000654
(87) Internationale Veröffentlichungsnummer: WO 2008/131725

(56) Entgegenhaltungen:
- DE-A1- 2 532 313
- DE-U- 6 917 609
- US-A- 3 746 412

## Beschreibung

### Gebiet der Erfindung

Die Erfindung betrifft ein Wälzlager mit einem ersten und einem zweiten Lagerring, mit einer Mehrzahl von Wälzkörpern, wobei erster und zweiter Lagerring über die Mehrzahl von Wälzkörpern zueinander um eine gemeinsame Achse drehbar angeordnet sind, mit einem Bordkörper, welcher einen Bord zur axialen Anlage der Wälzkörper bildet und welcher mit einer stirnseitigen Bordanlagefläche an einer stirnseitigen Ringanlagefläche einer der Lagerringe anliegt.

Derartige Wälzlager, beispielsweise Radialwälzlager, weisen oftmals eine separat zu montierende oder lose Bordscheibe als Bordkörper auf, woraus sich zum einen Vorteile bei der Montierbarkeit in bestimmten Bauformen von Wälz- bzw. Radialwälzlagern ergeben. Zum anderen werden Wälz- bzw. Radialwälzlager mit separaten Bordscheiben oftmals verwendet, um das axiale Spiel der Wälzkörper gezielt anpassen zu können.

Doch gerade die genaue Einstellung des axialen Spiels der Wälzkörper in dem Wälz- bzw. Radialwälzlager ist in der Fertigung bzw. bei der Montage dieser Wälzlager in einer Baugruppe aufgrund von Fertigungstoleranzen der Einzelkomponenten des Wälzlagers oder der Baugruppe mit umfangreichen praktischen Problemen verbunden.

Zur Kompensation derartiger Fertigungstoleranzen und zur Einstellung des Axialspiels ist es beispielsweise üblich, Passscheiben zwischen den Wälz- bzw. Radialwälzlagern einzusetzen. Die Dicke der Passscheiben wird - bei bekannten Toleranzen - durch ein vorheriges Ausmessen der IST-Maße der Einzelkomponenten der zu montierenden Baugruppe bzw. des Wälzlagers, des Gehäuses und der Welle bzw. von Wellenabsätzen bestimmt.

Anhand dieser Dicke wird dann eine auf die Toleranzen hin genau abgestimmte Passscheibe ausgewählt und eingesetzt.

Bei alternativen Vorgehensweisen werden die IST-Maße der Einzelkomponenten über statistische Größen abgeschätzt und eine Passscheibe eingesetzt, welche mit einer hohen Wahrscheinlichkeit zur Erzeugung des gewünschten Axialspiels/Vorspannung führen müsste. Beim Einbau von derart abgeschätzten Passscheiben erfolgt in der Regel eine anschließende Endprüfung der erzielten Lagereinstellung (Spiel/Vorspannung). Weicht diese zu weit von entsprechenden Vorgaben ab, muss eine derartig montierte Baugruppe bzw. Wälzlager wieder demontiert, die Passscheibe ausgetauscht und die Baugruppe bzw. das Wälzlager wieder montiert werden.

Die bekannten Vorgehensweisen sind somit entweder mit einem großen Arbeitsaufwand oder einer verbleibenden Restunsicherheit eines falschen Axialspiels verbunden.

Bei weiteren alternativen Vorgehensweise werden die Wälzlager einer Baugruppe mit Spiel aber auch angestellt (mit Vorspannung) eingebaut.

Ein Radialwälzlager mit einer separaten Bordscheibe wird beispielsweise in der Druckschrift DE 3923111 A1 von Haase et al. gezeigt und bildet wohl den nächstliegenden Stand der Technik.

Der Erfindung liegt die Aufgabe zu Grunde, ein Wälzlager, welches eine einfache Montage in einer Lageranordnung erlaubt, sowie eine entsprechende Lageranordnung vorzuschlagen.

Diese Aufgabe wird gelöst durch ein Wälzlager mit den Merkmalen des Anspruchs 1 sowie mit einer Lagerungsanordnung mit den Merkmalen des Anspruchs 14. Bevorzugte oder vorteilhafte Ausführungsformen der Erfindung ergeben sich aus den Unteransprüchen, der nachfolgenden Beschreibung sowie den beigefügten Figuren.

Erfindungsgemäß wird ein Wälzlager vorgeschlagen mit einem ersten und einem zweiten Lagerring sowie mit einer Mehrzahl von Wälzkörpern, welche zwischen dem ersten und dem zweiten Lagerring so angeordnet sind, dass diese relativ zueinander um eine gemeinsame Achse drehbar gelagert sind.

Die Lagerringe weisen gegenüberliegende und/oder konzentrisch zueinander angeordnete Laufbahnen für die Wälzkörper auf und können jeweils ein- oder mehrteilig ausgebildet sein. Die Wälzkörper sind bei möglichen Ausführungsformen der Erfindung einreihig, bei anderen Ausführungsformen zweireihig oder mehrreihig angeordnet.

Das Wälzlager umfasst mindestens einen Bordkörper, welcher als separates oder loses Bauteil ausgebildet ist und welcher einen Bord zur axialen Anlage bzw. für einen axialen Anlauf zumindest für einen Teil der Wälzkörper bildet. Insbesondere ist das Wälzlager so aufgebaut, so dass radial wirkende Kräfte durch die Lagerringe aufgenommen werden und axial wirkende Kräfte von außen, aber auch axiale Reaktionskräfte aus dem Wälzlager durch den Bord bzw. den Bordkörper abgeleitet werden.

Der Bordkörper weist eine stirnseitig, das heißt senkrecht zur gemeinsamen Achse ausgerichtete, dem oder den Lagerringen zugewandte Bordanlagefläche auf, welche an einer stirnseitigen, also senkrecht zu der gemeinsamen Achse angeordneten Ringanlagefläche einer der Lagerringe anliegt. Somit stützt sich der Bordkörper unmittelbar, insbesondere ohne Zwischenschaltung von weiteren Elementen, an einem der Lagerringe ab.

Erfindungsgemäß ist vorgesehen, dass die Bordanlagefläche und die Ringanlagefläche so ausgebildet sind, dass bei einer gegenseitigen Verdrehung von Bordkörper und Lagerring bzw. Bordanlagefläche und Ringanlagefläche die axiale Lage des Bords verändert wird. Insbesondere wird der Bord so angestellt, dass die Vorspannung und/oder die Axialluft des Radialwälzlagers verändert wird. Die Axialluft ist dabei vorzugsweise als das Maß bei nicht eingebauten Lagern definiert, um das sich die Lagerringe in axialer Richtung von einer Endlage in die andere bis zur spannungsfreien Anlage gegeneinander verschieben lassen.

Mit der erfindungsgemäßen Ausgestaltung des Radialwälzlagers ist es möglich, dass die Axialluft bzw. die Vorspannung bei bereits in Baugruppen eingebauten Radialwälzlagern gezielt einstellbar ist. Es kann somit auf die Verwendung von Passscheiben weitgehend oder vollständig verzichtet werden. Zumindest entfällt die umständliche und fehleranfällige Auswahl der Passscheiben. Ebenso ist das umständliche Demontieren eines Wälzlagers zum Austausch von Passscheiben nicht erforderlich.

Weiter bietet die Lösung die Möglichkeit, die Vorspannung bzw. die Axialluft nach einem Einlaufvorgang und entsprechenden Setzvorgängen der Baugruppe nachzustellen. Ein weiterer Vorteil der vorgeschlagenen Lösung liegt darin, dass der - bei einteiliger Ausbildung von Lagerring und Stützbord - notwendige Einstich zwischen Laufbahn und Anlagefläche des Stützbords entfallen kann, so dass die Laufbahn am entsprechenden Lagerring vollständig ausgebildet ist.

Bei einer bevorzugten Ausführungsform der Erfindung weisen Bordanlagefläche und/oder Ringanlagefläche jeweils eine Steigungsprofilierung auf, welche bei einer gegenseitigen Verdrehung zu der Veränderung der axialen Lage des Bords führen. Bevorzugt ist diese Steigungsprofilierung so ausgebildet, dass Bordanlagefläche und/oder Ringanlagefläche in mehrere Segmente, beispielsweise in drei Segmente, aufgeteilt ist bzw. sind, wobei jedes Segment in Umlaufrichtung eine in Richtung der gemeinsamen Achse ansteigende bzw. abfallende Rampe aufweist. Vorzugsweise ist die Rampe mit einer konstanten und/oder monotonen und/oder mit einer streng monotonen Steigung ausgebildet.

Die Steigungsprofilierung ist bevorzugt so ausgebildet, dass insbesondere bei der Wahl eines entsprechend großen Übersetzungsverhältnisses, also bei einer geeigneten Steigung der Rampen in Abhängigkeit vom Rollwinkel, eine sehr exakte stufenlose Einstellung der axialen Lage des Bords über eine Verdrehung des Bordkörpers zu dem entsprechenden Lagerring ermöglicht wird.

Bei alternativen Ausführungsformen ist die Rampe gestuft ausgebildet, so dass in Abhängigkeit des Relativdrehwinkels zwischen Bordkörper und Lagerring verschiedene, durch die Stufenhöhe definierte feste Abstände einstellbar sind. Bei der stufigen Ausführung ist es bevorzugt, wenn die Auflageflächen der Stufen senkrecht zur Längserstreckung der gemeinsamen Achse ausgebildet sind, da nach einem Einbau unter Vorspannung bei einer axialen Verspannung kein Rückstellmoment auftritt.

Bei einer Weiterbildung der Erfindung weisen die Rampen ergänzend eine Steigung in radialer Richtung und/oder einen Druckwinkel auf, so dass ein axiales Verspannen des Radialwälzlagers z.B. mittels einer Wellenmutter zu einer radialen Kraftkomponente und Zentrierung der Bordscheibe auf dem Lagerring führt.

Um den Effekt der Lageveränderung des Bords zu erreichen, ist es bevorzugt, dass die Rampen der Segmente einer Anlagefläche gleich orientiert sind und die Rampen der Gegenanlagefläche dazu jeweils gegengleich orientiert sind. Die Steigungen der Rampen von Anlagefläche und Gegenanlagefläche sind betragsmäßig gleich ausgebildet.

Eine besonders bevorzugte Ausführungsform liegt vor, wenn Bordanlagefläche und Ringanlagefläche jeweils drei Rampen aufweisen bzw. dreifach segmentiert sind. Bei dieser Ausbildung ist insbesondere vorgesehen, dass der Bordkörper auf dem Lagerring mit einer Dreipunktlagerung definiert und kippelfrei aufliegt.

Bei einer bevorzugten Weiterbildung der Erfindung greift der Bord zumindest abschnittsweise in den Laufring ein, insbesondere derart, dass eine Laufbahn des Laufrings in axialer Richtung zumindest abschnittsweise übergriffen wird. Diese Ausbildung stellt sicher, dass bei der axialen Verschiebung des Bordkörpers bzw. des Bords von dem Bord nur zusätzliche Abschnitte der Laufbahn des Laufrings verdeckt bzw. freigegeben werden.

Obwohl der Bordkörper eine beliebige Form aufweisen kann und beispielsweise auch Teil eines weiteren, komplexen Erzeugnisses sein kann, ist es bevorzugt, dass der Bordkörper als Bordscheibe, insbesondere als umformtechnisch hergestellte Bordscheibe ausgebildet ist.

In der eingebauten Situation wird die Fixierung des Bordkörpers gegenüber einer ungewollten Verdrehung relativ zu dem Lagerring vorzugsweise durch Reib- und/oder Kraftschluss erreicht, indem das Wälzlager mit einer axial wirkenden Spannung eingebaut bzw. axial verspannt wird. Bei einer bevorzugten Ausführungsform können ergänzend Sicherungsvorrichtungen zur Sicherung des Bordkörpers gegen eine unkontrollierte Verstellung im eingebauten Zustand vorgesehen sein, welche insbesondere als reibungsvergrößernde Einrichtungen ausgebildet sind. Hierzu können an der Bordanlagefläche und/oder an der Ringanlagefläche beispielsweise Profilierungen, Verzahnungen, insbesondere Hirth-Verzahnungen, Beschichtungen, Klebefilme oder dergleichen aufgebracht, eingebracht oder eingeformt sein.

Bei einer ersten möglichen Ausführungsalternative ist die Ringanlagefläche dem als Innenring ausgebildeten Lagerring zugeordnet, wobei der Bord in den Innenring eingreift und die Laufbahn des Innenrings begrenzt.

Bei einer vorteilhaften Realisierung ist, um eine Einstellbarkeit des Bordkörpers, das heißt eine Verdrehung des Bordkörpers relativ zu dem Innenring zu ermöglichen, der freie Innendurchmesser des Innenrings, welcher auf einer Achse oder Welle sitzt, kleiner ausgebildet als der freie Innendurchmesser des Bordkörpers, welcher auf der gleichen Welle bzw. Achse angeordnet ist.

Bei einer anderen Ausführungsalternative ist die Ringanlagefläche dem als Außenring ausgebildeten Lagerring zugeordnet, wobei bei dieser Ausführungsalternative die Relativverdrehung ermöglicht wird, indem der maximale Außendurchmesser des Innenrings größer ausgebildet ist als der maximale Außendurchmesser des Bordkörpers.

Bei weiteren Ausführungsalternativen ist sowohl für den Innenring als auch für den Außenring jeweils ein Bordkörper oder ein gemeinsamer Bordkörper vorgesehen.

Prinzipiell kann das Wälzlager beliebig ausgebildet sein. Bevorzugt handelt es sich dabei um ein Radialwälzlager, besonders bevorzugt ist aber dessen Ausbildung als Kegelrollenlager, Kegelrollenlagersatz, insbesondere in O-Anordnung, da bei dieser Anordnung der bzw. die Bordkörper jeweils außenseitig angeordnet sein können, oder als Zylinderrollenlager.

Ein weiterer Gegenstand der Erfindung betrifft eine Lagerungsanordnung, welche insbesondere als Ritzelwellenlagerung ausgebildet ist, mit einem Gehäuse, mit einer Welle oder einer Achse und mit mindestens einem Wälzlager, wie es soeben beschrieben wurde bzw. nach einem der vorhergehenden Ansprüche, insbesondere einem Radialwälzlager, wobei die Achse oder Welle über das Wälz- bzw. Radialwälzlager in dem Gehäuse gelagert ist.

Im Zusammenhang mit dem erfindungsgemäßen Wälzlager, insbesondere Radialwälzlager, ist es besonders bevorzugt, dass der Innenring auf die Welle oder die Achse aufgepresst und insbesondere verdrehsicher angeordnet ist und/oder der Außenring in dem Gehäuse eingepresst und/oder verdrehsicher angeordnet ist. Um eine Einstellbarkeit des Radialwälzlagers sicherzustellen, ist der Bordkörper auf der Welle bzw. Achse und/oder in dem Gehäuse mit einer Übergangspassung und/oder mit einer Übermaßpassung angeordnet, welche eine Drehbarkeit des Bordkörpers ermöglicht. Diese Ausführungsform weist den Vorteil eines sicheren Presssitzes des oder der Lagerringe bei radialer Belastung auf, wobei der radial belastete Teil des Radialwälzlagers im Bereich der Laufbahn der Lagerringe mit Standardbohrungen gefertigt wird und mit Presssitz auf der Welle bzw. der Achse aufgepresst wird. Der insbesondere ausschließlich axial belastete Teil des Radialwälzlagers, nämlich der Bordkörper, der als axialer Stützbord wirkt, weist eine zentrale Bohrung auf, die auf dem Wellensitz zu einer Übergangs- oder Übermaßpassung führt, welche eine Drehbarkeit des Bordkörpers ermöglicht.

Der Bord ist relativ zu den Lagerringen mit Spiel eingebaut, welches bevorzugt größer ausgebildet ist als das Spiel relativ zu der Achse bzw. Welle bzw. zu dem Gehäuse des Bordkörpers.

Um die eingestellte Winkelposition des Bordkörpers dauerhaft zu sichern, ist es bevorzugt, dass das Wälz- bzw. Radialwälzlager axial gesichert oder über eine Verschraubung axial verspannt ist. Die Verspannkräfte übersteigen die zu erwartenden axiale Betriebskräfte meist erheblich, um die Einfederung durch elastische Verformung der Komponenten zu minimieren. Der Außenring des Wälzlagers liegt dabei insbesondere einseitig an einer Gehäuseschulter an. Im Rahmen der axialen Verspannung kann auch der lose Bordkörper verdrehsicher mit eingespannt werden.

Besonders bevorzugt ist das Wälzlager bzw. das Radialwälzlager mittels einer Wellen- bzw. Achsmutter in axialer Richtung gegenüber dem Gehäuse verspannt ist.

Eine andere Möglichkeit der Sicherung des Bordkörpers ist gegeben, wenn der Bordkörper, an der der Bordanlagefläche abgewandten Seite, eine koaxial zu der gemeinsamen Achse angeordnete Konusanlagefläche aufweist, welche zur Aufnahme eines koaxial zu der gemeinsamen Achse angeordneten Konusrings ausgebildet ist, welcher in axialer Richtung auf bzw. in den Bordkörper eingepresst wird und diesen fixiert. Mittels eines solchen Konusrings können die einer Verdrehung entgegenwirkenden axialen Verspannkräfte noch erhöht werden.

Weitere Merkmale, Vorteile und Wirkung der Erfindung ergeben sich aus der nachfolgenden Beschreibung bevorzugter Ausführungsbeispiele der Erfindung sowie den beigefügten Figuren. Dabei zeigen:
- Figuren 1 bis 3: verschiedene Ansichten eines Kegelrollenlagers als ein erstes Ausführungsbeispiel der Erfindung;
- Figuren 4 und 5: eine Querschnittsdarstellung des Kegelrollenlagers in den Figuren 1 bis 3 in einer Baugruppe;
- Figuren 6 bis 9: verschiedene Ansichten eines Zylinderrollenlagers als ein zweites Ausführungsbeispiel der Erfindung;
- Figur 10: eine Ritzwellenlagerung mit dem oder einem anderen erfindungsgemäßen Kegelrollenlager in einer schemati- schen Querschnittsdarstellung.

Gleiche oder einander entsprechende Teile sind in den Figuren mit den gleichen oder entsprechenden Bezugszeichen versehen.

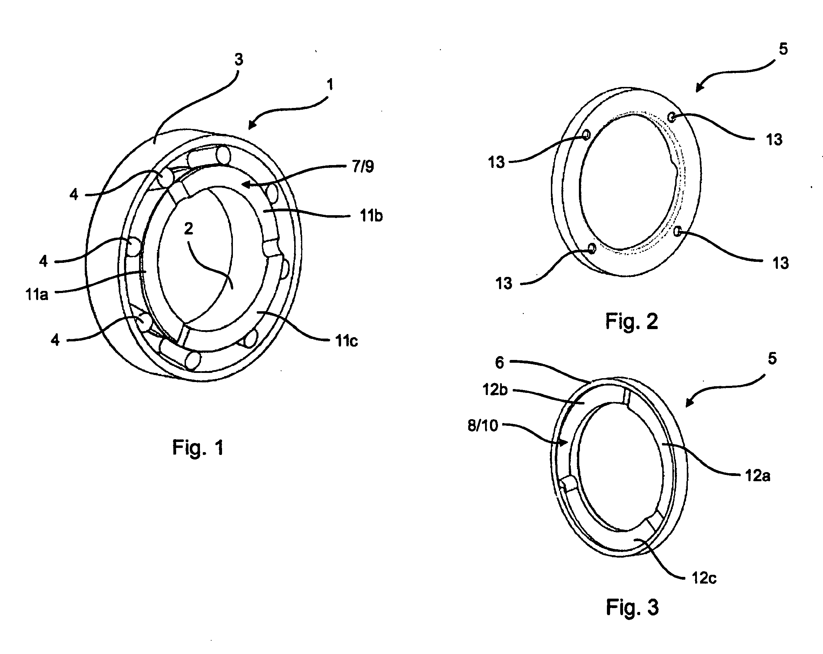

Figur 1 zeigt in einer schematischen dreidimensionalen Ansicht ein Kegelrollenlager 1, welches einen Innenring 2, einen Außenring 3 sowie eine Mehrzahl zwischen Innenring 2 und Außenring 3 rollbar angeordnete Kegelrollen 4 aufweist. Die Kegelrollen 4 sind gegenüber einer gemeinsamen Drehachse (nicht gezeigt) geneigt angeordnet, wobei die Figur 1 die Draufsicht auf das Kegelrollenlager 1 auf die Seite mit den radial nach außen angestellten Enden der Kegelrollen 4 zeigt.

Auf dieser Seite ist der Innenring 2 bordfrei ausgebildet. Statt eines angeformten Bords wird die in den Figuren 2 und 3 in einer schematischen dreidimensionalen Darstellung in einer Draufsicht schräg von vorne bzw. hinten dargestellte Bordscheibe 5 auf den Innenring 2 aufgesetzt. Die Bordscheibe 5 weist einen umlaufenden Rand auf, welcher im eingebauten Zustand in Richtung der gemeinsamen Achse als Bord 6 von der Bordscheibe 5 auskragt und den Innenring 2 so umgreift, dass das Bord 6 ein Stützbord oder ein Anlaufbord für die Kegelrollen 4 bildet.

Um die Axialluft und/oder die Vorspannung der Kegelrollen 4 in den Kegelrollenlagern 1 einstellen zu können, weisen sowohl der Innenring 2 als auch die Bordscheibe 5 jeweils stirnseitig eine Steigungsprofilierung 7 bzw. 8 auf. Mit der Steigungsprofilierung 7 bzw. 8 wird erreicht, dass in Abhängigkeit von einem Rollenwinkel durch Verdrehen der Bordscheibe 5 gegen den Innenring 2 eine sehr exakte, stufenlose Einstellung der axialen Lage der Bordscheibe 5 und damit des Bords 6 relativ zu dem Innenring 2 einstellbar ist. Die Steigungsprofilierung 7 bzw. 8 ist dabei auf einer Ringanlagefläche 9 bzw. Bordanlagefläche 10 als eine Mehrzahl von in Umlaufrichtung verlaufenden Rampen 11 a, b, c bzw. 12 a, b, c ausgebildet. Die Rampen 11 a, b, c der Ringanlagefläche 9 sind so orientiert, dass sie in Umlaufrichtung ansteigend ausgebildet sind. Die jeweiligen Minimal- und Maximalpunkte der Rampen 11 a, b, c liegen jeweils in einer gemeinsamen Ebene, die senkrecht zur gemeinsamen Achse ausgerichtet ist. Zwischen den Rampen 11 a, b, c sind Vertiefungen vorgesehen, welche als halbrund ausgebildete, radial verlaufende Rinnen realisiert sind (Auslauf, Freistich).

Die Rampen 12 a, b, c sind analog zu den Rampen 11 a, b, c ausgebildet, jedoch ist die Steigung genau gegengerichtet, so dass bei einer relativen Verdrehung von Bordscheibe 5 zu Innenring 2 der Bord 6 in axialer Richtung verschoben wird.

Um das Verdrehen der Bordscheibe 5 relativ zu dem Innenring 2 zu erleichtern, weist die Bordscheibe 5 axial verlaufende Durchgangsöffnungen 13 auf, welche regelmäßig in Umfangsrichtung der Bordscheibe 5 verteilt sind, und in die mit einem passenden Justagewerkzeug eingegriffen werden kann. Alternativ hierzu könnte ein Hackenschlüssel in entsprechende Nuten im Außendurchmesser des Bordkörpers/der Bordscheibe eingreifen.

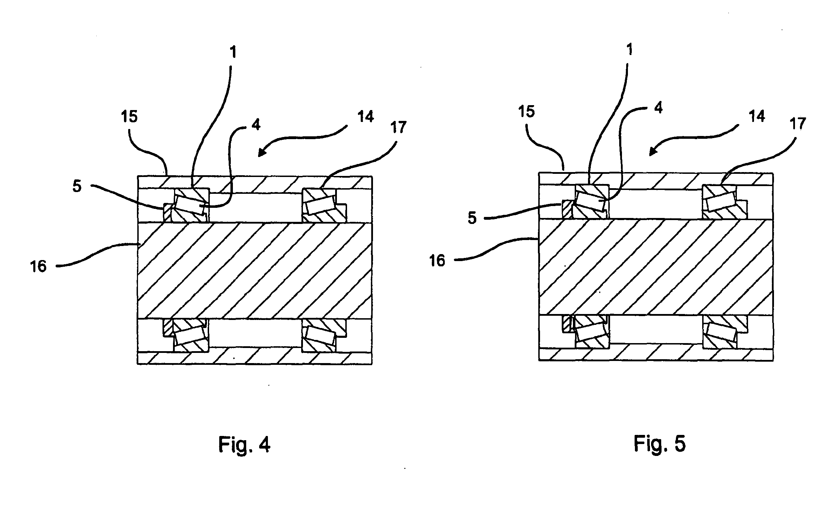

Die Figur 4 zeigt eine Baugruppe 14, welche ein Gehäuse 15 umfasst, in der eine Welle 16 über zwei Kegelrollenlager 1 und 17, die zueinander in O-Anordnung positioniert sind, gelagert ist. Das in der Darstellung Figur 4 linke Kegelrollenlager 1 weist die Bordscheibe 5 auf, wobei sich in der Figur 4 die Bordscheibe 5 an ihrem rechten axialen Anschlag befindet.

Die Figur 5 zeigt die gleiche Baugruppe 14, jedoch mit der Bordscheibe 5 in ihrer linken axialen Extremposition, wobei das Axialspiel maximiert bzw. die Vorspannung minimiert ist.

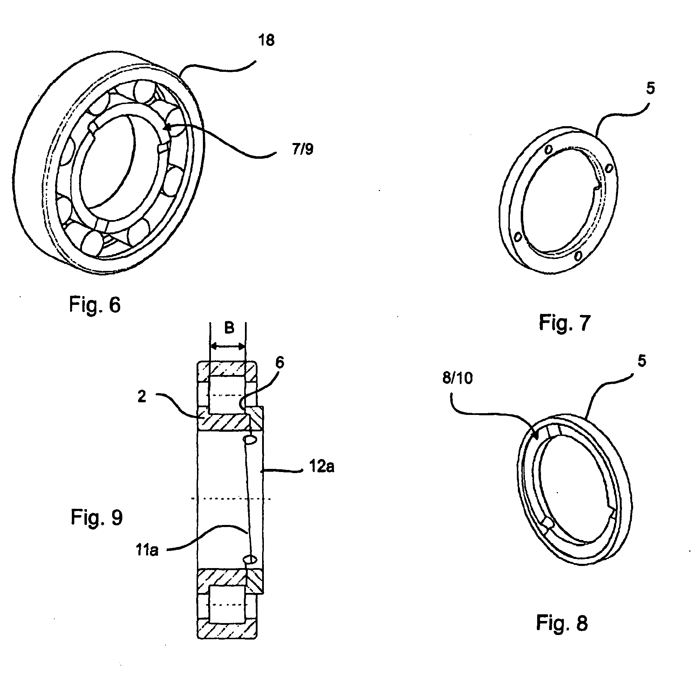

Die Figuren 6 bis 8 zeigen ein Zylinderrollenlager 18 mit einer einstellbaren Bordscheibe 5 als ein zweites Ausführungsbeispiel der Erfindung. Derartige Zylinderrollenlager 18 werden z.B. in Drehkolbengebläsen eingesetzt. Auch das Zylinderrollenlager 18 weist eine mit der Steigungsprofilierung 7 versehene Ringanlagefläche 9 auf, welche mit einer ebenfalls Steigungsprofilierung 8 versehenen Bordanlagefläche 10 in gleicher Weise zusammenwirkt wie zu den Figuren 1 bis 5 bereits beschrieben wurde.

Die Figur 9 zeigt das Zylinderrollenlager 18 in teilweiser geschnittener Darstellung, wobei die Rampe 11 a, welche dem Innenring 2 zugeordnet ist, und die Rampe 12 a, welche der Bordscheibe 5 zugeordnet ist, in einer Draufsicht zu erkennen ist. Aus der Darstellung ist es nachzuvollziehen, dass, für den Fall, dass die Bordscheibe 5 verdreht wird, der Bord 6 in axialer Richtung von dem Innenring 2 weggefahren wird, so dass sich die Breite B der Laufbahn des Innenrings 2 und damit die axiale Luft vergrößert.

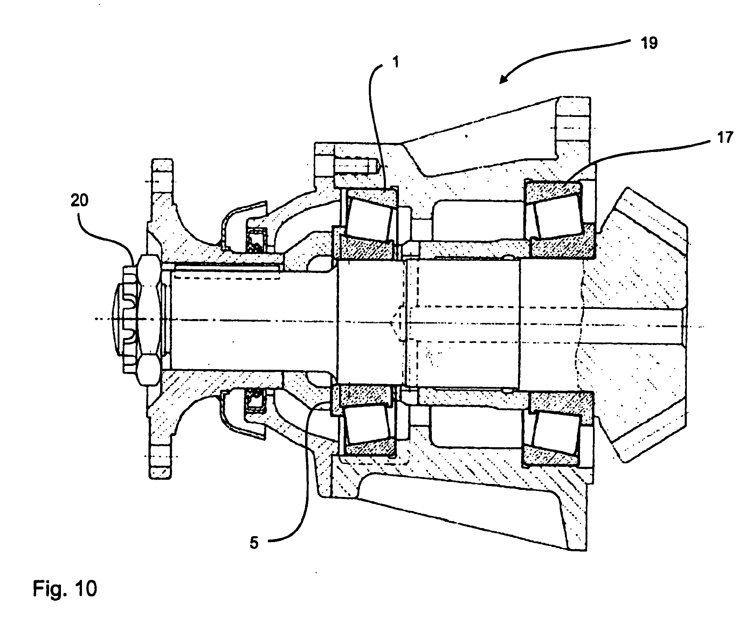

Die Figur 10 zeigt als ein Ausführungsbeispiel für eine Baugruppe eine Ritzwellenlagerung 19 mit Kegelrollenlagersätzen in O-Anordnung, wie sie häufig in Achsen schwerer LKW eingesetzt wird. Beispielhaft ist das linke Lager als Kegelrollenlager 1 mit separater Bordscheibe 5 ausgebildet, so dass die Axialluft des Lagers 1 durch Verdrehen der Bordscheibe 5 stufenlos einstellbar ist. Das rechte Lager ist als konventionelles Kegelrollenlager 17 ausgebildet. Bei alternativen Ausführungsformen können auch beide Kegelrollenlager 1 und 17 mit stellbarer Bordscheibe 5 versehen sein.

Die axiale Verspannung der Lager 1 und 17 erfolgt über eine Wellenmutter 20. Die Verwendung des einstellbaren Kegelrollenlagers 1 hat den Vorteil, dass die Axialluft/Radialluft und/oder die Vorspannung der Wälzkörper 4 des Kegelrollenlagers 1 durch Verdrehen der Bordscheibe 5 einstellbar ist.

Die Einstellung kann zum einen bei einer Erstmontage erfolgen, zum anderen kann auch eine Nachstellung nach einem Einlaufen der Ritzwellenlagerung 19 erfolgen, wobei nur die Wellenmutter 20 gelockert werden muss, die Baugruppe jedoch im montierten Zustand verbleibt.

Zusätzlich kann hier noch eine Anzeigemöglichkeit vorgesehen sein, die den Verdrehwinkel zwischen Bordkörper und Lagerring anzeigt, beispielsweise eine Skala, die einen direkten Bezug zum eingestellten Lagerspiel erlaubt. Damit wäre es dann möglich, eine auf "Null eingestellte" Einheit aus Lager und Bordkörper bis auf einen Anschlag einzupressen und das Lagerspiel zu messen. Zur Einstellung des erforderlichen Lagerspiels/Vorspannung wird dann der Bordkörper noch um einen bestimmten, direkt ablesbaren Winkel verdreht.

### Bezugszeichenliste

- 1: Kegelrollenlager
- 2: Innenring
- 3: Außenring
- 4: Kegelrollen, Wälzkörper
- 5: Bordscheibe
- 6: Bord
- 7 bzw. 8: Steigerungsprofilierung
- 9: Ringanlagefläche
- 10: Bordanlagefläche
- 11 a, b, c,: Rampen
- 12 a, b, c: Rampen
- 13: Durchgangsöffnung
- 14: Baugruppe
- 15: Gehäuse
- 16: Welle
- 17: Kegelrollenlager
- 18: Zylinderrollenlager
- 19: Ritzwellenlagerung
- 20: Wellenmutter

## Patentansprüche

1. Wälzlager (1, 18) mit einem ersten und einem zweiten Lagerring (2, 3), mit einer Mehrzahl von Wälzkörpern (4), wobei erster und zweiter Lagerring (2, 3) über eine Mehrzahl von Wälzkörpern (4) zueinander um eine gemeinsame Achse drehbar angeordnet sind,
mit einem Bordkörper (5), welcher einen Bord zur axialen Anlage der Wälzkörper bildet und welcher mit einer stirnseitigen Bordanlagefläche (10) an einer stirnseitigen Ringanlagefläche (9) einer der Lagerringe (2, 3) anliegt,
**dadurch gekennzeichnet, dass**
die Bordanlagefläche (10) und die Ringanlagefläche (9) so ausgebildet sind, so dass bei einer gegenseitigen Verdrehung von Bordkörper (5) und Lagerring (2, 3) die axiale Lage des Bords (6) verändert wird.

2. Wälzlager (1, 18) nach Anspruch 1, **dadurch gekennzeichnet, dass** die Bordanlagefläche (10) und/oder die Ringanlagefläche (9) in mehrere Segmente aufgeteilt ist, wobei jedes Segment in Umfangsrichtung eine Steigung oder Rampe (11 a, b, c, 12 a, b, c) aufweist.

3. Wälzlager (1, 18) nach Anspruch 2, **dadurch gekennzeichnet, dass** die Rampen (12 a, b, c) der Segmente der Bordanlagefläche (10) gleich und die Rampen (11 a, b, c,) der Segmente der Ringanlagefläche (9) dazu jeweils gegengleich orientiert sind.

4. Wälzlager (1, 18) nach einem der Ansprüche 2 oder 3, **dadurch gekennzeichnet, dass** die Bordanlagefläche (10) und Ringanlagefläche (9) jeweils drei oder mehr Rampen (11 a, b, c, 12 a, b, c) aufweisen und/oder dreifach oder mehrfach segmentiert sind.

5. Wälzlager (1, 18) nach einem der vorhergehenden Ansprüche, **dadurch gekennzeichnet, dass** der Bord (6) zumindest abschnittsweise in den Laufring (2, 3) eingreift.

6. Wälzlager (1, 18) nach einem der vorhergehenden Ansprüche, **dadurch gekennzeichnet, dass** der Bordkörper (5) als Bordring ausgebildet ist.

7. Wälzlager (1, 18) nach einem der vorhergehenden Ansprüche, **dadurch gekennzeichnet, dass** Bordanlagefläche (10) und/oder Ringanlagefläche (9) reibungsvergrößernde und/oder formschlüssige Einrichtungen aufweisen, die vorzugsweise als Oberflächenstrukturierung, insbesondere Hirth-Verzahnung, Beschichtung, Klebefilm oder dergleichen ausgebildet sind.

8. Wälzlager (1, 18) nach einem der vorhergehenden Ansprüche, **dadurch gekennzeichnet, dass** die Ringanlagefläche (9) dem als Innenring (2) ausgebildeter Lagerring zugeordnet ist.

9. Wälzlager (1, 18) nach Anspruch 8, **dadurch gekennzeichnet, dass** der freie Innendurchmesser des Innenrings (2) kleiner ausgebildet ist als der freie Innendurchmesser des Bordkörpers (5).

10. Wälzlager (1, 18) nach einem der vorhergehenden Ansprüche, **dadurch gekennzeichnet, dass** die Ringanlagefläche (9) dem als Außenring (3) ausgebildeter Lagerring zugeordnet ist.

11. Wälzlager (1, 18) nach Anspruch 10, **dadurch gekennzeichnet, dass** der maximale Außendurchmesser des Außenrings (3) größer ausgebildet ist als der maximale Außendurchmesser des Bordkörpers (5).

12. Wälzlager (1, 18) nach einem der vorhergehenden Ansprüche, **gekennzeichnet durch** seine Ausbildung als Radialwälzlager, insbesondere als Kegelrollenlager (1) insbesondere in O-Anordnung, oder als Zylinderrollenlager (18).

13. Wälzlager (1, 8) nach einem der vorhergehenden Ansprüche, **dadurch gekennzeichnet, dass** die Steigung oder Rampe konusformig, insbesondere für eine Zentrierung, ausgebildet ist.

14. Lagerungsanordnung (14, 19), insbesondere Ritzelwellentagerung, mit einem Gehäuse (15), mit einer Welle (16) oder einer Achse und mit mindestens einem Wälzlager (1, 18) nach einem der vorhergehenden Ansprüche, wobei die Achse oder Welle (16) über das Wälzlager (1, 18) in dem Gehäuse (15) gelagert ist.

15. Lagerungsanordnung (14, 19) nach Anspruch 14, **dadurch gekennzeichnet, dass** der Innenring (2) auf die Welle (16) oder die Achse aufgepresst ist und/oder der Außenring (3) in dem Gehäuse (15) verpresst angeordnet ist.

16. Lagerungsanordnung (14, 19) nach Anspruch 15, **dadurch gekennzeichnet, dass** der Bordkörper (5) auf der Welle (16) bzw. Achse und/oder in dem Gehäuse (15) mit Übergangspassung, insbesondere verdrehbar und/oder verschiebbar, angeordnet bzw. angepasst ist.

17. Lagerungsanordnung (14, 19) nach einem der Ansprüche 14 bis 16, **dadurch gekennzeichnet, dass** das Wälzlager (1, 18) mittels einer Wellen- bzw. Achsmutter (20) in axialer Richtung verspannt eingebaut ist.

18. Lagerungsanordnung (14, 19) nach einem der vorhergehenden Ansprüche, **dadurch gekennzeichnet, dass** der Bordkörper (5) an der der Bordanlagefläche (10) abgewandten Seite eine koaxial zu der gemeinsamen Achse angeordnete konusförmige Aufnahme aufweist, welche korrespondierend zu einem Konusring, insbesondere zur Erhöhung eines Verdrehwiderstands und /oder als Verdrehsicherung, ausgebildet ist.

19. Lagerungsanordnung (14, 19) nach einem der vorhergehenden Ansprüche, **dadurch gekennzeichnet, dass** eine Anzeige eines Verdrehwinkels zwischen Bordkörper und Lagerring, insbesondere eine Skala, vorgesehen ist.

## Claims

1. Rolling bearing (1, 18) having a first and a second bearing ring (2, 3), having a multiplicity of rolling bodies (4), with the first and second bearing rings (2, 3) being arranged so as to be rotatable relative to one another about a common axis by means of a multiplicity of rolling bodies (4),
having a flange body (5) which forms a flange for axial contact of the rolling bodies and which bears with an end-side flange contact surface (10) against an end-side ring contact surface (9) of one of the bearing rings (2, 3),
**characterized in that**
the flange contact surface (10) and the ring contact surface (9) are designed such that the axial position of the flange (6) is varied in the event of a rotation of the flange body (5) and bearing ring (2, 3) relative to one another.

2. Rolling bearing (1, 18) according to Claim 1, **characterized in that** the flange contact surface (10) and/or the ring contact surface (9) are/is divided into a plurality of segments, with each segment having a gradient or ramp (11 a, b, c, 12 a, b, c) in the circumferential direction.

3. Rolling bearing (1, 18) according to Claim 2, **characterized in that** the ramps (12 a, b, c) of the segments of the flange contact surface (10) are aligned in the same direction and the ramps (11 a, b, c) of the segments of the ring contact surface (9) are aligned in each case oppositely and identically thereto.

4. Rolling bearing (1, 18) according to one of Claims 2 or 3, **characterized in that** the flange contact surface (10) and the ring contact surface (9) have in each case three or more ramps (11 a, b, c, 12 a, b, c) and/or are divided into three or more segments.

5. Rolling bearing (1, 18) according to one of the preceding claims, **characterized in that** the flange (6) engages at least in sections into the race ring (2, 3).

6. Rolling bearing (1, 18) according to one of the preceding claims, **characterized in that** the flange body (5) is designed as a flange ring.

7. Rolling bearing (1, 18) according to one of the preceding claims, **characterized in that** the flange contact surface (10) and/or ring contact surface (9) have friction-increasing and/or positive-locking devices which are preferably designed as a surface structuring, in particular Hirth toothing, coating, adhesive film or the like.

8. Rolling bearing (1, 18) according to one of the preceding claims, **characterized in that** the ring contact surface (9) is assigned to the bearing ring which forms the inner ring (2).

9. Rolling bearing (1, 18) according to Claim 8, **characterized in that** the free inner diameter of the inner ring (2) is smaller than the free inner diameter of the flange body (5).

10. Rolling bearing (1, 18) according to one of the preceding claims, **characterized in that** the ring contact surface (9) is assigned to the bearing ring which forms the outer ring (3).

11. Rolling bearing (1, 18) according to Claim 10, **characterized in that** the maximum outer diameter of the outer ring (3) is greater than the maximum outer diameter of the flange body (5).

12. Rolling bearing (1, 18) according to one of the preceding claims, **characterized by** the design of said rolling bearing (1, 18) as a radial rolling bearing, in particular as a tapered-roller bearing (1) in particular in an O-type arrangement, or as a cylindrical-roller bearing (18).

13. Rolling bearing (1, 8) according to one of the preceding claims, **characterized in that** the gradient or ramp is formed conically, in particular so as to provide centering.

14. Bearing arrangement (14, 19), in particular pinion shaft bearing arrangement, having a housing (15), having a shaft (16) or an axle and having at least one rolling bearing (1, 18) according to one of the preceding claims, with the axle or shaft (16) being mounted in the housing (15) by means of the rolling bearing (1, 18).

15. Bearing arrangement (14, 19) according to Claim 14, **characterized in that** the inner ring (2) is pressed onto the shaft (16) or the axle and/or the outer ring (3) is arranged pressed into the housing (15).

16. Bearing arrangement (14, 19) according to Claim 15, **characterized in that** the flange body (5) is arranged or fitted on the shaft (16) or axle and/or in the housing (15) with a transition fit, in particular so as to be rotatable and/or movable.

17. Bearing arrangement (14, 19) according to one of Claims 14 to 16, **characterized in that** the rolling bearing (1, 18) is installed so as to be clamped in the axial direction by means of a shaft or axle nut (20).

18. Bearing arrangement (14, 19) according to one of the preceding claims, **characterized in that** the flange body (5) has, on the side facing away from the flange contact surface (10), a conical recess which is arranged coaxially with respect to the common axis and which is designed correspondingly to a conical ring, in particular in order to increase a twisting resistance and/or as an anti-twist facility.

19. Bearing arrangement (14, 19) according to one of the preceding claims, **characterized in that** a display, in particular a scale, is provided to indicate an angle of twist between the flange body and bearing ring.

## Revendications

1. Palier à roulement (1, 18), comprenant une première et une deuxième bague de palier (2, 3), avec une pluralité de corps de roulement (4), la première et la deuxième bague de roulement (2, 3) étant disposées à rotation par le biais d'une pluralité de corps de roulement (4) l'une par rapport à l'autre autour d'un axe commun,
avec un corps de bord (5), qui forme un bord pour l'appui axial des corps de roulement, et qui s'applique avec une surface d'appui de bord (10) du côté frontal contre une surface d'appui de bague (9) du côté frontal de l'une des bagues de palier (2, 3),
**caractérisé en ce que**
la surface d'appui de bord (10) et la surface d'appui de bague (9) sont réalisées de telle sorte que dans le cas d'une rotation mutuelle du corps de bord (5) et de la bague de palier (2, 3), la position axiale du bord (6) soit modifiée.

2. Palier à roulement (1, 18) selon la revendication 1, **caractérisé en ce que** la surface d'appui de bord (10) et/ou la surface d'appui de bague (9) sont divisées en plusieurs segments, chaque segment présentant dans la direction périphérique une pente ou une rampe (11a,b,c, 12a,b,c).

3. Palier à roulement (1, 18) selon la revendication 2, **caractérisé en ce que** les rampes (12a,b,c) des segments de la surface d'appui de bord (10) sont orientées de manière identique et les rampes (11a,b,c) des segments de la surface d'appui de bague (9) sont orientées à chaque fois de manière diamétralement opposée.

4. Palier à roulement (1, 18) selon l'une quelconque des revendications 2 ou 3, **caractérisé en ce que** la surface d'appui de bord (10) et la surface d'appui de bague (9) présentent à chaque fois trois rampes ou plus (11a,b,c, 12a,b,c), et/ou sont segmentées trois fois ou plusieurs fois.

5. Palier à roulement (1, 18) selon l'une quelconque des revendications précédentes, **caractérisé en ce que** le bord (6) vient en prise au moins en partie dans la bague de roulement (2, 3).

6. Palier à roulement (1, 18) selon l'une quelconque des revendications précédentes, **caractérisé en ce que** le corps de bord (5) est réalisé sous forme de bague de bord.

7. Palier à roulement (1, 18) selon l'une quelconque des revendications précédentes, **caractérisé en ce que** la surface d'appui de bord (10) et/ou la surface d'appui de bague (9) présentent des dispositifs augmentant les frottements et/ou à engagement positif, qui sont réalisés de préférence sous forme de structuration de surface, notamment sous forme de denture de Hirth, de revêtement, de film adhésif ou similaire.

8. Palier à roulement (1, 18) selon l'une quelconque des revendications précédentes, **caractérisé en ce que** la surface d'appui de bague (9) est associée à la bague de palier réalisée sous forme de bague intérieure (2).

9. Palier à roulement (1, 18) selon la revendication 8, **caractérisé en ce que** le diamètre intérieur libre de la bague intérieure (2) est inférieur au diamètre intérieur libre du corps de bord (5).

10. Palier à roulement (1, 18) selon l'une quelconque des revendications précédentes, **caractérisé en ce que** la surface d'appui de bague (9) est associée à la bague de palier réalisée sous forme de bague extérieure (3).

11. Palier à roulement (1, 18) selon la revendication 10, **caractérisé en ce que** le diamètre extérieur maximal de la bague extérieure (3) est supérieur au diamètre extérieur maximal du corps de bord (5).

12. Palier à roulement (1, 18) selon l'une quelconque des revendications précédentes, **caractérisé par** sa réalisation sous forme de palier à roulement radial, notamment sous forme de palier à rouleaux coniques (1), en particulier suivant un agencement en O, ou sous forme de palier à rouleaux cylindriques (18).

13. Palier à roulement (1, 8) selon l'une quelconque des revendications précédentes, **caractérisé en ce que** la pente ou la rampe est réalisée sous forme conique, notamment en vue d'un centrage.

14. Agencement de support sur palier (14, 19), en particulier support sur palier d'arbre de pignon, comprenant un boîtier (15), un arbre (16) ou un axe, et au moins un palier à roulement (1, 18) selon l'une quelconque des revendications précédentes, l'axe ou l'arbre (16) étant monté par le biais du palier à roulement (1, 18) dans le boîtier (15).

15. Agencement de support sur palier (14, 19) selon la revendication 14, **caractérisé en ce que** la bague intérieure (2) est pressée sur l'arbre (16) ou l'axe, et/ou la bague extérieure (3) est disposée de manière compressée dans le boîtier (15).

16. Agencement de support sur palier (14, 19) selon la revendication 15, **caractérisé en ce que** le corps de bord (5) est disposé ou adapté sur l'arbre (16) ou l'axe et/ou dans le boîtier (15) avec ajustement de transition, notamment de manière rotative et/ou coulissante.

17. Agencement de support sur palier (14, 19) selon l'une quelconque des revendications 14 à 16, **caractérisé en ce que** le palier à roulement (1, 18) est monté de manière serrée dans la direction axiale au moyen d'un écrou d'arbre ou d'axe (20).

18. Agencement de support sur palier (14, 19) selon l'une quelconque des revendications précédentes, **caractérisé en ce que** le corps de bord (5) présente, sur le côté opposé à la surface d'appui de bord (10), un logement de forme conique disposé coaxialement à l'axe commun, qui est réalisé de manière correspondante à une bague conique, notamment pour augmenter la résistance à la rotation et/ou sous forme de fixation contre la rotation.

19. Agencement de support sur palier (14, 19) selon l'une quelconque des revendications précédentes, **caractérisé en ce qu'**un affichage d'un angle de rotation entre le corps de bord et la bague de palier, notamment une échelle, est prévu.
